# EUROPEAN PATENT APPLICATION

(11) **EP 4 835 026 A1**
(43) Date of publication of application: **04.11.2026**
(21) Application number: 24909375.8
(22) Date of filing: 06.02.2024
(51) Int. Cl.: C09J 7/30, C09J 123/12, C09J 123/14, H01M 50/553, H01M 50/534, H01M 50/184, H01M 50/131

(54) **INSULATING ADHESIVE AND BATTERY**

(30) Priority: 29.12.2023 CN 202311857380
(71) Applicant: Zhuhai CosMX Battery Co., Ltd., Zhuhai, Guangdong 519180 (CN)
(72) Inventor: PEI, Jiajia, Zhuhai, Guangdong 519180 (CN); ZHANG, Liuhao, Zhuhai, Guangdong 519180 (CN); CHEN, Minkang, Zhuhai, Guangdong 519180 (CN); LIN, Wenrong, Zhuhai, Guangdong 519180 (CN); HE, Fei, Zhuhai, Guangdong 519180 (CN); LI, Suli, Zhuhai, Guangdong 519180 (CN)
(74) Representative: Murgitroyd & Company
(86) International application number: PCT/CN2024/076294
(87) International publication number: WO 2025/138403

(57) **Abstract**

The present invention relates to the technical field of batteries, and in particular to an insulating adhesive and a battery. The insulating adhesive includes at least three melting regions, wherein a first melting region has a melting peak al of 95°C-115°C, a second melting region has a melting peak a2 of 115°C-130°C, and a third melting region has a melting peak a3 of 140°C-165°C, and 25°C ≤ T3-T1 ≤ 70°C. The insulating adhesive of the present invention has a good bonding strength between layers, does not delaminate under the immersion of the electrolyte, and can also have a high-temperature opening performance when thermal runaway occurs in the cell. The battery including the insulating adhesive has a high safety performance and ensures a good sealing performance of the sealed housing, so that the electrolyte leakage of the sealed housing caused by delamination of the insulating adhesive will not occur.

## Description

### TECHNICAL FIELD

The present invention relates to the technical field of batteries, and in particular to an insulating adhesive and a battery including the insulating adhesive.

### BACKGROUND

Lithium-ion batteries have been widely used in consumer electronics, electric vehicles, power tools and other products because of their high energy density, high voltage, and long cycle life. In recent years, with the increasing requirements for fast charging and high-rate discharging of cells, the requirements for the electrical performance and safety performance of cells during use are further improved. During fast charging of the cell, the current density at the electrode tabs is the highest. During excessive high-rate discharging, the temperature of the cell will rise sharply. At this time, the thermal shrinkage of the separator will cause short circuit between the positive and negative electrodes and the decomposition of the SEI film, and a sharp increase in the internal temperature of the cell, which will lead to fire or explosion of the cell. Therefore, it is critical to prevent the thermal runaway of the cell and improve the safety performance of lithium-ion batteries.

### SUMMARY

A battery is composed of a positive electrode plate assembly, a negative electrode plate assembly, a separator, a packaging film, and an electrolyte. Since the cell housing needs to communicate with the outside for conduction, the electrode tab adhesive is hated-sealed with the aluminum-plastic film (packaging film) to form a sealed housing, thereby blocking moisture and air and ensuring the sealing performance of the cell. However, after long-term immersion in the electrolyte, the interlayer bonding force of the electrode tab adhesive decreases and delamination occurs, which leads to the opening of the sealed edges and the leakage of electrolyte in the sealed housing and allows water vapor to enter the cell, thus reducing the safety performance of the battery. To address the above technical problems existing in the prior art, the present invention provides an insulating adhesive and a battery including the same. The insulating adhesive of the present invention has a good bonding strength between layers, does not delaminate under the immersion of the electrolyte, and can also have a high-temperature opening performance when thermal runaway occurs in the cell. The battery including the insulating adhesive has a high safety performance and ensures a good sealing performance of the sealed housing, so that the electrolyte leakage of the sealed housing caused by delamination of the insulating adhesive will not occur.

In order to achieve the above object, a first aspect of the present invention provides an insulating adhesive, wherein the insulating adhesive includes at least three melting regions, wherein a first melting region has a melting peak a1 of 95°C-115°C, a second melting region has a melting peak a2 of 115°C-130°C, and a third melting region has a melting peak a3 of 140°C-165°C, and the temperature T3 of the melting peak a3 of the third melting region and the temperature T1 of the melting peak a1 of the first melting region satisfy the following relationship: b = T3-T1, where b is in°C, and b is 25°C-70°C.

In an embodiment, b is 40°C-60°C;
and/or the insulating adhesive includes at least a first adhesive layer and a second adhesive layer, wherein the second adhesive layer is located on the surface of one side of the first adhesive layer, the first adhesive layer has a melting point of 95°C-130°C, and the second adhesive layer has a melting point of 140°C-170°C.

In an embodiment, the insulating adhesive includes a third adhesive layer located on the surface of one side of the second adhesive layer away from the first adhesive layer, the insulating adhesive satisfying: the melting point of the second adhesive layer > the melting point of the third adhesive layer, and/or the melting point of the second adhesive layer > the melting point of the first adhesive layer;
and/or the third adhesive layer has a melting point of 95°C-130°C;
and/or a temperature difference between the melting point of the third adhesive layer and the melting point of the first adhesive layer is -5°C to 25°C.

In an embodiment, the melting point of the first adhesive layer includes the melting peak a1 of the first melting region and the melting peak a2 of the second melting region;
and/or the melting point of the second adhesive layer includes a melting peak a3 of the third melting region;
and/or the melting point of the third adhesive layer includes the melting peak a1 of the first melting region and the melting peak a2 of the second melting region.

A second aspect of the present invention provides a battery including the insulating adhesive of the first aspect.

In an embodiment, the battery includes an electrode plate assembly and a packaging film, wherein the electrode plate assembly includes an electrode plate and an electrode plate conductive material, the electrode plate includes a current collector and an active material layer located on the surface of one side or both sides of the current collector, the electrode plate conductive material is located at one end of the current collector, a first end of the conductive material is a welding end which is welded and connected to the current collector, a second end opposite to the first end is a protruding end, an adhesive coated region is formed between the welding end and the protruding end, an insulating adhesive is provided on the adhesive coated region and covers the surface of the conductive material, a surface of one side of the first adhesive layer in the insulating adhesive away from the second adhesive layer is adjacent to the conductive material, the packaging film and the insulating adhesive are connected together to form a sealed housing, the electrode plate assembly is located in a sealed space formed by the sealed housing, the packaging film includes an inner film layer connected to the second adhesive layer or the third adhesive layer of the insulating adhesive, a metal layer located on the surface of the inner film layer, and an outer film layer located on the surface of the metal layer, the inner film layer includes a first film layer directly connected to the second adhesive layer or the third adhesive layer of the insulating adhesive and a second film layer located on the surface of the first film layer, and the first film layer has a melting point of 120°C-165°C, preferably 130°C-145°C;
and/or the difference between the melting point of the first film layer and the melting point of the second adhesive layer or the third adhesive layer is -5°C to 40°C;
and/or the first film layer includes modified polypropylene and/or a propylene-ethylene copolymer;
and/or the modified polypropylene includes one or more of maleic anhydride-modified polypropylene, metallocene-modified polypropylene, an ethylene-propylene copolymer, and a silane coupling agent-modified polypropylene.

In an embodiment, the heat-seal tensile force between the packaging film and the insulating adhesive is Y±0.5, in N/mm, and the temperature of the battery is T, in°C, and the battery satisfies the following relationship: Y = -0.04572 × T+5.779, where T is 20°C - 125°C.

By means of the above technical solution, the present invention has at least the following advantages over the prior art.

The insulating adhesive of the present invention includes at least three melting regions and the melting peaks of the three melting regions are limited to a specific range, and at the same time, by defining the relationship of the temperature difference between the melting peak of the first melting region (the lowest temperature region) and the melting peak of the third melting region (the highest temperature region), the bonding strength between layers of the insulating adhesive is improved while providing the insulating adhesive with a high-temperature opening performance, such that the battery can be ensured not to leak electrolytes when no thermal runaway occurs, and when thermal runaway occurs, the insulating adhesive melts to provide a heat dissipation channel for the battery, thus improving the safety performance of the battery.

Other features and advantages of the present invention will be described in detail in the Detailed Description of Embodiments hereinbelow.

### BRIEF DESCRIPTION OF THE DRAWINGS

FIG. 1 shows a DSC curve of an insulating adhesive in Example I-1 of the present invention;
FIG. 2 shows a schematic view of the structure of an insulating adhesive including two adhesive layers of the present invention;
FIG. 3 shows a schematic view of the structure of an insulating adhesive including three adhesive layers of the present invention; and
FIG. 4 shows a schematic view of the structure of an electrode plate assembly of the present invention.

### DETAILED DESCRIPTION OF THE EMBODIMENTS

Hereinafter, specific embodiments of the present invention will be described in detail. It should be understood that the specific embodiments described herein are merely intended to illustrate and explain the present invention but are not intended to limit the present invention. In the present invention, unless otherwise specified, all the numerical ranges are inclusive of the endpoints.

A first aspect of the present invention provides an insulating adhesive, wherein the insulating adhesive includes at least three melting regions, wherein a first melting region has a melting peak a1 of 95°C-115°C, a second melting region has a melting peak a2 of 115°C-130°C, and a third melting region has a melting peak a3 of 140°C-165°C, and the temperature T3 of the melting peak a3 of the third melting region and the temperature T1 of the melting peak a1 of the first melting region satisfy the following relationship: b = T3-T1, where b is in°C, and b is 25°C-70°C.

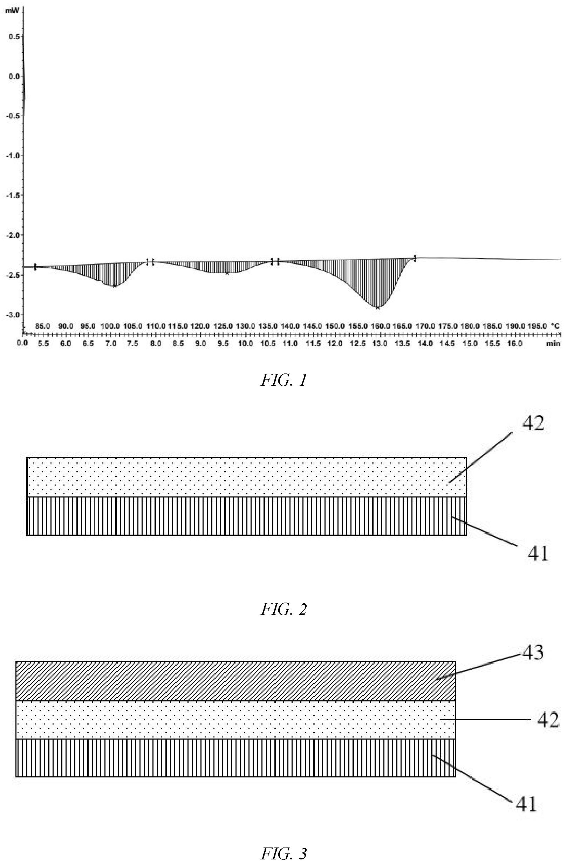

FIG. 1 shows a DSC curve of an insulating adhesive of the present invention, and as can be seen in FIG. 1, the insulating adhesive includes at least three melting regions.

It has been found by research that a electrode tab adhesive in the prior art is prone to delamination when immersed in an electrolyte, leading to the opening of the sealed edges and the leakage of electrolyte in the sealed housing. The reason is that there are two melting regions in the electrode tab adhesive in the prior art, and the temperature difference between the melting peaks of these two melting regions is large, such that the bonding strength between layers of the electrode tab adhesive is lower and the delamination is prone to occur under the immersion of the electrolyte.

To improve the bonding strength between layers of the insulating adhesive while providing the insulating adhesive with a high-temperature opening performance, the insulating adhesive of the present invention includes at least three melting regions, with the melting peaks of these three melting regions being limited within specific ranges. The first melting region has a melting peak a1 of 95°C-115°C (for example, 95°C, 100°C, 105°C, 110°C, or 115°C), the second melting region has a melting peak a2 of 115°C-130°C (for example, 115°C, 118°C, 120°C, 122°C, 125°C, 128°C, or 130°C), and the third melting region has a melting peak a3 of 140°C-165°C (for example, 140°C, 145°C, 150°C, 155°C, 160°C, or 165°C). The temperature T3 of the melting peak a3 of the third melting region and the temperature T1 of the melting peak a1 of the first melting region satisfy the following relationship: b = T3-T1, where b is in°C, and b is 25°C-70°C (for example, 25°C, 30°C, 35°C, 40°C, 45°C, 50°C, 55°C, 60°C, 65°C, or 70°C). In the present invention, the term melting peak means an endothermic melting peak.

The insulating adhesive of the present invention includes at least three melting regions. When the melting peaks of the three melting regions of the insulating adhesive are limited within the above specific ranges, it can be seen from the temperatures of the melting peaks of the three melting regions that there is a second melting region between the first melting region and the third melting region where the temperature difference is large, the temperature difference between the melting peak a2 of the second melting region and the melting peak a1 of the first melting region is small, and the temperature difference between the melting peak a2 of the second melting region and the melting peak a1 of the third melting region is also small, such that by the transition of the second melting region, the first melting region with a lower temperature can be connected with the third melting region with a higher temperature, thereby enhancing the bonding strength between layers of the insulating adhesive and preventing the insulating adhesive from delamination under the immersion of the electrolyte. Moreover, when the melting peak a1 of the first melting region is limited within the above specific range, the Vicat transition point of the first melting region is lower, and the heat deflection temperature is lower. Compared with that of conventional electrode tab adhesives, the first melting region is more susceptible to heat deformation at the same ambient temperature, thereby ensuring that when thermal runaway occurs in the battery (where the battery temperature reaches 100-120°C), the insulating adhesive melts and opens to form a heat dissipation channel, thereby improving the safety performance of the battery. Furthermore, when the difference b between the temperature T3 of the melting peak a3 of the third melting region and the temperature T1 of the melting peak a1 of the first melting region is limited within a specific range, the crystallization peaks of molecules in the adhesive layers of the insulating adhesive become closer, the degree of cross-linking between molecules increases, and the crystallinity of the materials within the adhesive layers increases, such that the bonding performance between the adhesive layers can be improved, and the bonding between the adhesive layers can be tighter, so as to avoid delamination during the immersion of electrolyte, which would cause an excessive high water vapor passage rate, and thus avoid the problems of battery swelling and electrolyte leakage while also preventing excessive melting of the insulating adhesive, thereby preventing the metal layer in the packaging film from coming too close to the conductive material inside the battery to cause a short circuit.

In the present invention, by defining the melting regions of the insulating adhesive, the melting peaks of these regions, and the temperature differences between the melting peaks, it has been possible to enable the insulating adhesive to achieve a higher bonding strength and high-temperature opening performance than those in the prior art. To further improve the effect, one or more technical features may be further optimized.

In an embodiment, b is 40°C-60°C. When b is limited to the above specific range, the bonding strength of the insulating adhesive can be further improved, while the safety performance of the battery is thus further improved.

In an embodiment, the insulating adhesive includes at least a first adhesive layer and a second adhesive layer, wherein the second adhesive layer is located on the surface of one side of the first adhesive layer, and the first adhesive layer has a melting point of 95°C-130°C (for example, 95°C, 100°C, 105°C, 110°C, 115°C, 120°C, 125°C, or 130°C). In the present invention, the term melting point refers to the temperature corresponding to the peak of the endothermic melting peak during the heating process.

In an embodiment, the first adhesive layer has a melting point of 100°C-110°C.

In an embodiment, the second adhesive layer has a melting point of 140°C-170°C (for example, 140°C, 145°C, 150°C, 155°C, 160°C, 165°C, or 170°C). When the melting point of the second adhesive layer is limited to the above specific range, the second adhesive layer can be prevented from excessive melting during the heating process of the sealing head, thereby preventing short circuit caused by the contact between the conductive material and the metal layer of the packaging film.

In an embodiment, the second adhesive layer has a melting point of 155-165°C.

As shown in FIG. 2, the insulating adhesive 4 includes two adhesive layers, i.e., a first adhesive layer 41 and a second adhesive layer 42, the second adhesive layer 42 being located on the surface of one side of the first adhesive layer 41.

In an embodiment, the melting point of the first adhesive layer includes the melting peak a1 of the first melting region and the melting peak a2 of the second melting region.

In an embodiment, the melting point of the second adhesive layer includes the melting peak a3 of the third melting region.

When the insulating adhesive includes two adhesive layers, the insulating adhesive includes three melting regions, where the first adhesive layer includes a first melting region and a second melting region, and the second adhesive layer includes a third melting region. In this case, the first adhesive layer includes the second melting region, and the temperature difference between the melting peaks of the first adhesive layer and the second adhesive layer is relatively small, and therefore the bonding strength between layers of the insulating adhesive including two adhesive layers is high, and the insulating adhesive will not delaminate under the immersion of the electrolyte.

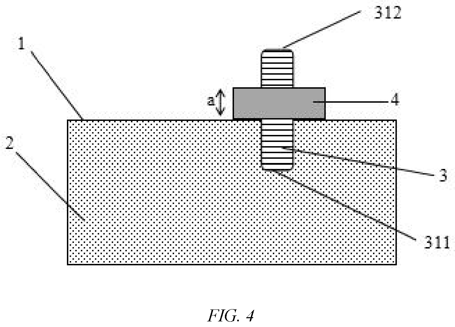

The width of the first adhesive layer and the width of the second adhesive layer may be the same or different. In the present invention, as shown in FIG. 4, the direction a of the width of the adhesive layer is perpendicular to the direction in which the adhesive layer is wound.

In an embodiment, the width of the second adhesive layer is less than the width of the first adhesive layer.

In an embodiment, the insulating adhesive includes a third adhesive layer located on the surface of one side of the second adhesive layer away from the first adhesive layer, the insulating adhesive satisfying: the melting point of the second adhesive layer > the melting point of the third adhesive layer, and/or the melting point of the second adhesive layer > the melting point of the first adhesive layer.

In an embodiment, the insulating adhesive satisfies: the melting point of the second adhesive layer > the melting point of the third adhesive layer, and the melting point of the second adhesive layer > the melting point of the first adhesive layer. When the melting point of the first adhesive layer, the melting point of the second adhesive layer, and the melting point of the third adhesive layer in the insulating adhesive satisfy the above specific relationship, compared to conventional electrode tab adhesives, the heat deformation temperatures of the first adhesive layer and the third adhesive layer are low (i.e., lower melting points), and at the same temperature, the first and third adhesive layers are more susceptible to heat deformation, and the third adhesive layer and the inner film layer of the packaging film adjacent to the third adhesive layer are hot-melted and then cooled and recrystallized, which can improve the intermolecular crosslinking and enhance the bonding force between the insulating adhesive and the inner layer of the packaging film, thus avoiding the opening of the sealed edges and the leakage of electrolyte caused by cell dropping or high-frequency vibration; in addition, the second adhesive layer (with a higher melting point), as a high-temperature layer, can prevent excessive melting, and avoid short circuit caused by too close distance between the metal layer of the packaging film and the conductive material. When the cell reaches a high temperature of 100°C-120°C (at which point thermal runaway occurs in the cell), melting first occurs between the first adhesive layer and the conductive material, as well as between the third adhesive layer and the inner film layer of the packaging film, and the heat-seal tensile force drops sharply, such that the packaging film at the conductive material and the insulating adhesive covering the surface of the conductive material melt and open to form a heat dissipation channel, which improves the safety performance of the battery. That is, when no thermal runaway occurrs in the cell, the insulating adhesive bonds tightly with both the packaging film and the conductive material to provide a sealed space for the cell. When thermal runaway occurs in the cell, the first and third adhesive layers of the insulating adhesive melt first, and the bonding forces between the insulating adhesive at the conductive material and the packaging film and between the insulating adhesive at the conductive material and the conductive material are greatly reduced, such that the thermal shock force generated inside the cell due to thermal runaway can burst open an opening at the sealed location of the conductive material to provide a heat dissipation channel for the cell, thereby preventing cell thermal runaway and improving the safety performance of the battery.

According to a particular embodiment, the third adhesive layer has a melting point of 95-130°C (for example, 95°C, 100°C, 105°C, 110°C, 115°C, 120°C, 125°C, or 130°C). When the melting point of the third adhesive layer is limited to the above specific range, the metallophilic properties of the third adhesive layer can be improved, such that the bonding strength between the third adhesive layer and the inner film layer of the packaging film can be improved.

In an embodiment, the third adhesive layer has a melting point of 100-125°C.

In an embodiment, a temperature difference h between the melting point of the third adhesive layer and the melting point of the first adhesive layer is -5°C to 25°C (for example, -5°C, -3°C, 0°C, 3°C, 5°C, 10°C, 15°C, 20°C, or 25°C). When the temperature difference between the melting point of the third adhesive layer and the melting point of the first adhesive layer is limited to the above specific range, the heat deformation upon melting of the first adhesive layer and the third adhesive layer occurs essentially synchronous, and at the same temperature, the packaging film is more prone to melting, cooling, and crystallization with the third adhesive layer, resulting in stronger bonding force therebetween and improving the room-temperature sealing performance of the cell. In addition, when thermal runaway occurs in the cell at a high temperature, the interface between the first adhesive layer and the conductive material, as well as the bonding interface between the third adhesive layer and the packaging film can melt first, which attenuates the tensile force of the overall sealing interface of the packaging film and the conductive material, making the interface easier to open and providing a heat dissipation channel to prevent the battery from catching fire and burning.

It can be understood that the melting point of the third adhesive layer may be higher than that of the first adhesive layer, or the melting point of the third adhesive layer may be lower than that of the first adhesive layer. When the temperature difference between the melting point of the third adhesive layer and the melting point of the first adhesive layer is a negative value, it means that the melting point of the third adhesive layer is lower than that of the first adhesive layer. When the temperature difference between the melting point of the third adhesive layer and the melting point of the first adhesive layer is a positive value, it means that the melting point of the third adhesive layer is higher than that of the first adhesive layer.

In an embodiment, the melting point of the third adhesive layer includes a melting peak a1 of the first melting region and a melting peak a2 of the second melting region.

As shown in FIG. 3, the insulating adhesive 4 includes three adhesive layers, the third adhesive layer 43 being located on the surface of the side of the second adhesive layer 42 away from the first adhesive layer 41.

When the insulating adhesive includes three adhesive layers, the insulating adhesive includes three melting regions, where the first adhesive layer includes a first melting region and a second melting region, the second adhesive layer includes a third melting region, and the third adhesive layer includes a first melting region and a second melting region. In this case, both the first adhesive layer and the third adhesive layer include a second melting region, and the temperature differences between the melting peaks of the first and second adhesive layers, and between those of the third and second adhesive layers, are both small, and therefore the bonding strength between layers of the insulating adhesive including three adhesive layers is high, and the insulating adhesive will not delaminate under the immersion of the electrolyte.

In an embodiment, the first adhesive layer includes a first modified resin.

In an embodiment, the first modified resin includes one or more of maleic anhydride-modified polypropylene, acrylic-modified polypropylene, metallocene-modified polypropylene, a propylene-ethylene copolymer, and a butene-propylene copolymer.

In an embodiment, the first modified resin includes a first modified resin A1 and a first modified resin A2, wherein the first modified resin A1 has a melting point d1 of 95°C ≤ d1 ≤ 115°C, and the first modified resin A2 has a melting point d2 of 115°C < d2 ≤ 130°C, based on the total weight of the first adhesive layer, a content by weight of the first modified resin A1 is ≥ 50 wt% (for example, 50 wt%, 50.5 wt%, 55 wt%, 60 wt%, 65 wt%, 70 wt%, 75 wt%, 80 wt%, 85 wt%, 90 wt%, 95 wt%, or 100 wt%), and a content by weight of the first modified resin A2 is ≤ 50 wt% (for example, 0 wt%, 0.5 wt%, 1 wt%, 5 wt%, 10 wt%, 15 wt%, 20 wt%, 25 wt%, 30 wt%, 35 wt%, 40 wt%, 45 wt%, 49.5 wt%, or 50 wt%). When the content by weight of the first modified resin A1 in the first adhesive layer is 100 wt%, it means that the first adhesive layer is the first modified resin A1. When the content by weight of the first modified resin A2 in the first adhesive layer is 0 wt%, it means that the first modified resin A2 is not present in the first adhesive layer.

As can be seen from the melting points of the first modified resin A1 and the first modified resin A2, the melting point of the first adhesive layer includes the melting peak a1 of the first melting region and the melting peak a2 of the second melting region.

In an embodiment, the third adhesive layer includes a second modified resin.

In an embodiment, the second modified resin is selected from one or more of maleic anhydride-modified polypropylene, acrylic-modified polypropylene, metallocene-modified polypropylene, a propylene-ethylene copolymer, and a butene-propylene copolymer.

In an embodiment, the third adhesive layer includes a second modified resin, and the third adhesive layer includes a second modified resin C1 and a second modified resin C2, wherein the second modified resin C1 has a melting point f1 of 95°C ≤ f1 ≤ 115°C, the second modified resin C2 has a melting point f2 of 115°C < f2 ≤ 130°C, based on the total weight of the third adhesive layer, a content by weight of the second modified resin C1 is ≥ 50 wt% (for example, 50 wt%, 50.5 wt%, 55 wt%, 60 wt%, 65 wt%, 70 wt%, 75 wt%, 80 wt%, 85 wt%, 90 wt%, 95 wt%, or 100 wt%), and a content by weight of the second modified resin C2 is ≤ 50 wt% (for example, 0 wt%, 0.5 wt%, 1 wt%, 5 wt%, 10 wt%, 15 wt%, 20 wt%, 25 wt%, 30 wt%, 35 wt%, 40 wt%, 45 wt%, 49.5 wt%, or 50 wt%). When the content by weight of the second modified resin C1 in the third adhesive layer is 100 wt%, it means that the third adhesive layer is the second modified resin C1. When the content by weight of the second modified resin C2 in the third adhesive layer is 0 wt%, it means that the second modified resin C2 is not present in the third adhesive layer.

As can be seen from the melting points of the second modified resin C1 and the second modified resin C2, the melting point of the third adhesive layer includes the melting peak a1 of the first melting region and the melting peak a2 of the second melting region.

The width of the first adhesive layer, the width of the second adhesive layer and the width of the third adhesive layer may each be the same or different.

In an embodiment, the width of the second adhesive layer < the width of the first adhesive layer.

In an embodiment, the second adhesive layer includes one or more of polypropylene, block polypropylene, and copolypropylene, wherein the block polypropylene includes alternating propylene-ethylene segments and/or alternating butylene-propylene segments; and the copolypropylene includes an ethylene-propylene copolymer and/or a butylene-propylene copolymer.

A second aspect of the present invention provides a battery including the insulating adhesive of the first aspect.

In an embodiment, the battery includes an electrode plate assembly and a packaging film, wherein the electrode plate assembly includes an electrode plate and an electrode plate conductive material, the electrode plate includes a current collector and an active material layer located on the surface of one side or both sides of the current collector, the electrode plate conductive material is located at one end of the current collector, a first end of the conductive material is a welding end which is welded and connected to the current collector, a second end opposite to the first end is a protruding end, an adhesive coated region is formed between the welding end and the protruding end, an insulating adhesive is provided on the adhesive coated region and covers the surface of the conductive material, a surface of one side of the first adhesive layer in the insulating adhesive away from the second adhesive layer is adjacent to the conductive material, the packaging film and the insulating adhesive are connected together to form a sealed housing, the electrode plate assembly is located in a sealed space formed by the sealed housing, the packaging film includes an inner film layer connected to the second adhesive layer or the third adhesive layer of the insulating adhesive, a metal layer located on the surface of the inner film layer, and an outer film layer located on the surface of the metal layer, the inner film layer includes a first film layer directly connected to the second adhesive layer or the third adhesive layer of the insulating adhesive and a second film layer located on the surface of the first film layer, and the first film layer has a melting point of 120°C-165°C.

As shown in FIG. 4, the electrode plate assembly includes an electrode plate and an electrode plate conductive material, the electrode plate includes a current collector 1 and an active material layer 2 located on the surface of one side or both sides of the current collector 1, the electrode plate conductive material 3 is located at one end of the current collector 1, a first end of the conductive material 3 is a welding end 311 which is welded and connected to the current collector 1, a second end opposite to the first end is a protruding end 312, an adhesive coated region is formed between the welding end and the protruding end, an insulating adhesive 4 is provided on the adhesive coated region and covers the surface of the conductive material 3, and a surface of one side of the first adhesive layer 41 in the insulating adhesive away from the second adhesive layer 42 is adjacent to the conductive material 3.

In an embodiment, the electrode plate includes a positive electrode plate and/or a negative electrode plate.

In an embodiment, the positive electrode plate includes a positive electrode current collector and a positive electrode active material layer located on the surface of one side or both sides of the positive electrode current collector.

In an embodiment, the positive electrode current collector includes aluminum or an aluminium alloy.

In an embodiment, the negative electrode plate includes a negative electrode current collector and a negative electrode active material layer located on the surface of one side or both sides of the negative electrode current collector.

In an embodiment, the negative electrode current collector includes nickel, nickel-plated copper, a nickel alloy, or a copper alloy.

In an embodiment, the inner film layer includes one or more of polypropylene, an ethylene-propylene copolymer, a maleic anhydride-modified polypropylene, and a butylene-propylene copolymer.

In an embodiment, the metal layer includes aluminum, copper, or stainless steel.

In an embodiment, the outer film layer is a protective layer. The outer film layer includes one or more of polyamide (PA), polyethylene terephthalate (PET), and polyethylene naphthalate (PEN).

In an embodiment, the first film layer has a melting point of 120°C-165°C (for example, 120°C, 125°C, 130°C, 135°C, 140°C, 145°C, 150°C, 155°C, 160°C, or 165°C).

In an embodiment, the first film layer has a melting point of 130-145°C.

In an embodiment, the difference between the melting point of the first film layer and the melting point of the third adhesive layer is -5°C to 40°C (for example, -5°C, -3°C, 0°C, 3°C, 5°C, 10°C, 15°C, 20°C, 25°C, 30°C, 35°C, or 40°C). When the difference between the melting point of the first film layer and the melting point of the third adhesive layer falls within the specified range mentioned above, both the first film layer and the third adhesive layer exhibit lower and relatively similar melting points at the same heat sealing temperature, and the first film layer and the third adhesive layer are hot-melted and then recrystallized, which can improve the intermolecular crosslinking and enhance the bonding force therebetween, thus improving the safety performance of the cell and avoiding the opening of the sealed edges and the leakage of electrolyte caused by cell dropping or high-frequency vibration.

It can be understood that the melting point of the first film layer may be higher than that of the third adhesive layer, or the melting point of the first film layer may be lower than that of the third adhesive layer. When the temperature difference between the melting point of the first film layer and the melting point of the third adhesive layer is a negative value, it means that the melting point of the first film layer is lower than that of the third adhesive layer. When the temperature difference between the melting point of the first film layer and the melting point of the third adhesive layer is a positive value, it means that the melting point of the first film layer is higher than that of the third adhesive layer.

In an embodiment, the insulating adhesive satisfies: the melting point of the second adhesive layer > the melting point of the third adhesive layer, and the melting point of the second adhesive layer > the melting point of the first adhesive layer, and the temperature difference between the melting point of the third adhesive layer and the melting point of the first adhesive layer is -5°C to 25°C, and the difference between the melting point of the first film layer and the melting point of the third adhesive layer is -5°C to 40°C.

In an embodiment, the first film layer includes modified polypropylene and/or a propylene-ethylene copolymer.

In an embodiment, the modified polypropylene includes one or more of maleic anhydride-modified polypropylene, metallocene-modified polypropylene, an ethylene-propylene copolymer, and a silane coupling agent-modified polypropylene.

In an embodiment, the heat-seal tensile force between the packaging film and the insulating adhesive is Y±0.5, in N/mm, and the temperature of the battery is T, in°C, and the battery satisfies the following relationship: Y = -0.04572 × T+5.779, where T is 20°C - 125°C (for example, 20°C, 30°C, 40°C, 50°C, 60°C, 70°C, 80°C, 90°C, 100°C, 110°C, 120°C, or 125°C). As can be seen from the above relationship, the heat seal tensile force Y between the packaging film and the insulating adhesive decreases as the temperature increases, such that when thermal runaway occurs in the cell, the heat-seal tensile force between the packaging film and the insulating adhesive is small (for example, when the temperature T of the battery is 110°C, Y = -0.04572 x 110 + 5.779 = 0.7498 N/mm, at which point the heat-seal tensile force is 0.7498 ± 0.5), and the thermal force generated inside the cell is sufficient to punch the connection between the packaging film and the insulating adhesive, thus providing a channel for heat diffusion and consequently improving the safety performance of the battery.

The heat-seal tensile force between the packaging film and the insulating adhesive is Y±0.5, in N/mm. When testing the heat-seal tensile force between the packaging film and the insulating adhesive, the measured values vary depending on the sampling location. Therefore, in order to be consistent with the actual situation, a tolerance of ±0.5 was added on the basis of Y.

It should be noted that the numerical representations of "first", "second", "third", etc., in the present invention are merely used to distinguish different substances or modes of use rather than indicating an order.

The present invention will be described in detail below by means of examples. The examples described in the present invention are merely some, rather than all, of the examples of the present invention. Based on the examples of the present invention, all other examples obtained by those of ordinary skill in the art without creative efforts fall within the scope of protection of the present invention.

Example I group was used to illustrate the insulating adhesive of the present invention.

### Example 1-1

Composition of first adhesive layer: 80 parts by weight of a first modified resin A1 (maleic anhydride-modified polypropylene, melting point d1: 105.4°C), and 20 parts by weight of a first modified resin A2 (a propylene-ethylene copolymer, melting point d2: 120.8°C).

Composition of second adhesive layer: 100 parts by weight of copolypropylene (melting point: 161.5°C).

The insulating adhesive had a two-layer structure, wherein the first adhesive layer had a melting point of 105.4°C & 120.8°C (i.e., the first adhesive layer included a first melting region and a second melting region, where the temperature T1 of the melting peak of the first melting region was 105.4°C, and the temperature T2 of the melting peak of the second melting region was 120.8°C); and
the second adhesive layer had a melting point of 161.5°C (i.e., the second adhesive layer included a third melting region, and the temperature T3 of the melting peak of the third melting region was 161.5°C).

### Example I-2 group

This group of examples was used to illustrate the effects when b was changed by changing the proportion of monomers of maleic anhydride-modified polypropylene in the first adhesive layer to change T1 and/or by changing the proportion of monomers of copolymerized polypropylene in the second adhesive layer to change T3.

This group of examples was carried out with reference to Example I-1, except that b was changed by changing T1 and/or T3, specifically as shown in Table I-1.

### Example I-3 group

### Example I-3a

Composition of first adhesive layer: Reference can be made according to the first adhesive layer in Example I-1.

Composition of second adhesive layer: Reference can be made according to the second adhesive layer in Example I-1.

Composition of third adhesive layer: 80 parts by weight of a second modified resin C1 (maleic anhydride-modified polypropylene, melting point f1: 105.4°C), and 20 parts by weight of a second modified resin C2 (a propylene-ethylene copolymer, melting point f2: 120.8°C).

The insulating adhesive had a three-layer structure, wherein the first adhesive layer was the same as the first adhesive layer in Example I-1;
the second adhesive layer was the same as the second adhesive layer in Example I-1; and
the third adhesive layer had a melting point of 105.4°C & 120.8°C (i.e., the third adhesive layer included a first melting region and a second melting region, where the temperature T1 of the melting peak of the first melting region was 105.4°C, and the temperature T2 of the melting peak of the second melting region was 120.8°C). See Table I-1 for details.

### Example I-3b

This example was carried out with reference to Example I-3a, except that T1 was changed by changing the proportion of monomers of maleic anhydride-modified polypropylene in the first adhesive layer, and T2 was changed by changing the proportion of monomers of the propylene-ethylene copolymer, specifically as shown in Table I-1.

### Example I-3c

This example was carried out with reference to Example I-3a, except that the content by weight of maleic anhydride-modified with a melting point d1 of 105.4°C in the first adhesive layer was adjusted to 100%, and the content by weight of the propylene-ethylene copolymer with a melting point f2 of 120.8°C in the third adhesive layer was also adjusted to 100%, specifically as shown in Table I-1.

### Example I-3d

This example was carried out with reference to Example I-3b, except that the content by weight of maleic anhydride-modified with a melting point d1 of 95.2°C in the first adhesive layer was adjusted to 100%, and the content by weight of the propylene-ethylene copolymer with a melting point f2 of 130.5°C in the third adhesive layer was also adjusted to 100%, specifically as shown in Table I-1.

### Example I-3e

This example was carried out with reference to Example I-3d, except that d1 was changed by changing the proportion of monomers of maleic anhydride-modified polypropylene in the first adhesive layer, and f1 was changed by changing the proportion of monomers of maleic anhydride-modified polypropylene in the third adhesive layer, specifically as shown in Table I-1.

### Comparative example I-1

This comparative example was carried out with reference to Example I-3c, except that the insulating adhesive did not include a third adhesive layer, specifically as shown in Table I-1.

**Table I-1a**

| | T1/°C | T2/°C | T3/°C | b | Melting point of first adhesive layer/°C | Melting point of second adhesive layer/°C | Melting point of third adhesive layer/°C | h/°C |
|---|---|---|---|---|---|---|---|---|
| Example I-1 | 105.4 | 120.8 | 161.5 | 56.1 | 105.4&120.8 | 161.5 | - | - |
| Example I-2a | 95.2 | 120.8 | 161.5 | 66.3 | 95.2&120.8 | 161.5 | - | - |
| Example I-2b | 115.8 | 120.8 | 161.5 | 45.7 | 115.8&120.8 | 161.5 | - | - |
| Example I-2d | 105.4 | 120.8 | 140.9 | 35.5 | 105.4&120.8 | 140.9 | - | - |
| Example I-3a | 105.4 | 120.8 | 161.5 | 56.1 | 105.4&120.8 | 161.5 | 105.4&120.8 | 0&15.4 |
| Example I-3b | 95.2 | 130.5 | 161.5 | 66.3 | 95.2&130.5 | 161.5 | 95.2&130.5 | 0&35.3 |
| Example I-3c | 105.4 | 120.8 | 161.5 | 56.1 | 105.4 | 161.5 | 120.8 | 15.3 |
| Example I-3d | 95.2 | 130.5 | 161.5 | 66.3 | 95.2 | 161.5 | 130.5 | 35.3 |
| Example I-3e | 102.8 | 105.6 | 161.5 | 58.7 | 105.6 | 161.5 | 102.8 | -2.8 |
| Comparative Example 1 | 105.4 | - | 161.5 | 56.1 | 105.4 | 161.5 | - | - |

**Table I-1b**

| | First modified resin A1 | d1/° C | Content by weight of first modified resin A1 in first adhesive layer /% | First modified resin A2 | d2/° C | Content by weight of first modified resin A2 in first adhesive layer /% | Composition of second adhesive layer | Second modified resin C1 | f1/° C | Content by weight of second modified resin C1 in third adhesive layer /% | Second modified resin C2 | f2/° C | Content by weight of second modified resin C2 in third adhesive layer /% |
|---|---|---|---|---|---|---|---|---|---|---|---|---|---|
| Example I-1 | Maleic anhydride-modified polypropylene | 105. 4 | 80 | Propylen e-ethylene copolymer | 120. 8 | 20 | Copolypropylene | - | - | - | - | - | - |
| Example I-2a | Maleic anhydride-modified polypropylene | 95.2 | 80 | Propylen e-ethylene copolymer | 120. 8 | 20 | Copolypropylene | - | - | - | - | - | - |
| Example I-2b | Maleic anhydride-modified polypropylene | 115. 8 | 80 | Propylen e-ethylene copolymer | 120. 8 | 20 | Copolypropylene | - | - | - | - | - | - |
| Example I-2d | Maleic anhydride-modified polypropylene | 105. 4 | 80 | Propylen e-ethylene copolymer | 120. 8 | 20 | Copolypropylene | - | - | - | - | - | - |
| Example I-3a | Maleic anhydride-modified polypropylene | 105. 4 | 80 | Propylen e-ethylene copolymer | 120. 8 | 20 | Copolypropylene | Maleic anhydride-modified polypropylene | 105. 4 | 80 | Propylen e-ethylene copolymer | 120. 8 | 20 |
| Example I-3b | Maleic anhydride-modified polypropylene | 95.2 | 80 | Propylen e-ethylene copolymer | 130. 5 | 20 | Copolypropylene | Maleic anhydride-modified polypropylene | 95.2 | 80 | Propylen e-ethylene copolymer | 130. 5 | 20 |
| Example I-3c | Maleic anhydride-modified polypropylene | 105.4 | 100 | - | - | - | Copolypropylene | - | - | - | Propylene-ethylene copolymer | 120.8 | 100 |
| Example I-3d | Maleic anhydride-modified polypropylene | 95.2 | 100 | - | - | - | Copolypropylene | - | - | - | Propylen e-ethylene copolymer | 130. 5 | 100 |
| Example I-3e | Maleic anhydride-modified polypropylene | 105. 6 | 100 | - | - | - | Copolypropylene | Maleic anhydride-modified polypropylene | 102. 8 | 100 | - | - | - |
| Comparative example 1 | Maleic anhydride-modified polypropylene | 105. 4 | 100 | - | - | - | Copolypropylene | - | - | - | - | - | - |

| | | | | | | | | | | | | | |
|---|---|---|---|---|---|---|---|---|---|---|---|---|---|
| - indicates the absence; h represents the temperature difference between the melting point of the third adhesive layer and the melting point of the first adhesive layer. | | | | | | | | | | | | | |

### Preparation example I-1

### (1) Positive electrode plate assembly

A positive electrode active material (97.6 parts by weight of lithium cobalt oxide), a conductive agent (1.35 parts by weight of conductive carbon black), a binder (1.05 parts by weight of PVDF), and a solvent (NMP) were uniformly mixed with stirring, and then coated onto surfaces of both sides of a positive electrode current collector (10 µm thick aluminum foil) to form a positive electrode active material layer. The obtained material was dried and rolled to obtain a positive electrode plate, with an area of the positive electrode plate not coated with the positive electrode active material layer being weldable to a positive electrode conductive material.

The positive electrode conductive material was aluminum, a first end of the positive electrode conductive material was a welding end, which was welded and connected to the positive electrode current collector, a second end opposite to the first end was a protruding end, an adhesive coated region was formed between the welding end and the protruding end, an insulating adhesive was provided on the adhesive coated region and covered the surface of the positive electrode conductive material, and the surface of one side of the first adhesive layer in the insulating adhesive away from the second adhesive layer was adjacent to the positive electrode conductive material. The length of the positive electrode conductive material at the welding end on the positive electrode current collector was 30 mm. The insulating adhesives used were those in the Example I group and Comparative Example I-1 respectively, with specifications of 0.1 mm thickness, 6 mm width, and 2.5 mm single-side adhesive width.

(2) Negative electrode plate assembly: A negative electrode active material (97 parts by weight of graphite), a conductive agent (1.5 parts by weight of conductive carbon black), a binder (1.5 parts by weight of a styrene-butadiene rubber) and a solvent (deionized water) were uniformly mixed with stirring and coated onto surfaces of both sides of a negative electrode current collector (10 µm thick copper foil). The obtained material was dried and rolled to obtain a negative electrode plate, with an area of the negative electrode plate not coated with the negative electrode active material layer being weldable to a negative electrode conductive material.

The negative electrode conductive material was nickel-plated copper, a first end of the negative electrode conductive material was a welding end, which was welded and connected to the negative electrode current collector, a second end opposite to the first end was a protruding end, an adhesive coated region was formed between the welding end and the protruding end, an insulating adhesive was provided on the adhesive coated region and covered the surface of the negative electrode conductive material, and the surface of one side of the first adhesive layer in the insulating adhesive away from the second adhesive layer was adjacent to the negative electrode conductive material. The length of the negative electrode conductive material at the welding end on the negative electrode current collector was 30 mm. The insulating adhesives used were those in the Example I group and Comparative Example I-1 respectively, with specifications of 0.1 mm thickness, 6 mm width, and 2.5 mm single-side adhesive width.

### (3) Separator

A polyethylene substrate with a thickness of 7 µm was used.

### (4) Electrolyte

In a glove box filled with argon gas (H₂O < 0.1 ppm, O₂ < 0.1 ppm), organic solvents were uniformly mixed in proportion, and then a thoroughly dried lithium salt was added thereto rapidly, and after the salt was dissolved, an additive was added to obtain the desired electrolyte. 10 parts by weight the lithium salt, 85 parts by weight of the organic solvents (40 parts by weight of ethylene carbonate (EC), 40 parts by weight of diethyl carbonate (DEC), 5 parts by weight of fluoroethylene carbonate (FEC)) and 5 parts by weight of the additive (PS) were involved.

### (5) Packaging film

An aluminium-plastic film was used.

### (6) Preparation of battery

The positive electrode plate assembly obtained in step (1), the negative electrode plate assembly obtained in step (2), and the separator obtained in step (3) were stacked in the order of the positive electrode plate assembly, the separator, and the negative electrode plate assembly, and the stack was then wound to obtain a cell. The cell was placed into the packaging film obtained in step (5), and the electrolyte obtained in step (4) was injected into the packaging film, followed by processes including vacuum packaging, leaving to stand, formation, shaping, sorting, etc., to obtain the lithium-ion battery.

### Test Example I-1

### 1. Hot box test

### (1) hot box test at 130°C

At an ambient temperature of 25°C ± 3°C, the cells were discharged at 0.2C to a cut-off voltage of 3.0V and then allowed to stand for 10 min. The cells were charged at a constant current of 0.5C until the voltage reached the upper limit of 4.2V, followed by a constant voltage charge at 4.2V to a cut-off value of 0.02C, the cells were tested at 25°C ± 3°C for the voltage, internal resistance, and thickness in a fully charged state, the fully charged cells were then placed into a test box, the test box was heated at a heating rate of (5 ± 2)°C/min, and after the internal temperature of the box reached 130°C ± 2°C, this temperature was maintained constantly for 60 min. Upon completion of the test, the cells were observed to see if they caught fire. If a cell caught fire, it was considered as a fail, and if not, it was considered as a pass. Each sample was tested ten times in total, and the results were expressed as "number of passes / 10", for example, "10/10" indicated that all 10 tests passed, while "5/10" indicated that 5 out of the 10 tests passed.

### (2) hot box test at 135°C

At an ambient temperature of 25°C ± 3°C, the cells were discharged at 0.2C to a cut-off voltage of 3.0V and then allowed to stand for 10 min. The cells were charged at a constant current of 0.5C until the voltage reached the upper limit of 4.2V, followed by a constant voltage charge to a cut-off value of 0.02C, the cells were tested at 25°C ± 3°C for the voltage, internal resistance, and thickness in a fully charged state, the fully charged cells were then placed into a test box, the test box was heated at a heating rate of (5 ± 2)°C/min, and after the internal temperature of the box reached 135°C ± 2°C, this temperature was maintained constantly for 60 min. Upon completion of the test, the cells were observed to see if they caught fire. If a cell caught fire, it was considered as a fail, and if not, it was considered as a pass. Each sample was tested ten times in total, and the results were expressed as "number of passes / 10", for example, "10/10" indicated that all 10 tests passed, while "5/10" indicated that 5 out of the 10 tests passed.

### (3) hot box test at 140°C

At an ambient temperature of 25°C ± 3°C, the cells were discharged at 0.2C to a cut-off voltage of 3.0V and then allowed to stand for 10 min. The cells were charged at a constant current of 0.5C until the voltage reached the upper limit of 4.2V, followed by constant voltage charge to a cut-off value of 0.02C, the cells were tested at 25°C ± 3°C for the voltage, internal resistance, and thickness in a fully charged state, the fully charged cells were then placed into a test box, the test box was heated at a heating rate of (5 ± 2)°C/min, and after the internal temperature of the box reached 140°C ± 2°C, this temperature was maintained constantly for 60 min. Upon completion of the test, the cells were observed to see if they caught fire. If a cell caught fire, it was considered as a fail, and if not, it was considered as a pass. Each sample was tested ten times in total, and the results were expressed as "number of passes / 10", for example, "10/10" indicated that all 10 tests passed, while "5/10" indicated that 5 out of the 10 tests passed.

### 2. Complete device drop test

The cell was assembled into the device, at an ambient temperature of 25°C ± 3°C, it was discharged at 0.2C to a cut-off voltage of 3.0V and allowed to stand for 10 min. It was then charged at a constant current of 0.5C and a constant voltage to 50% SOC. The device was dropped onto a granite from a height of 1.5 meters with the electrode tab side of the cell facing downwards. This was repeated for 20 cycles. If the cell opened, it was considered as a fail, and if not, it was considered as a pass. Each sample was tested ten times in total, and the results were expressed as "number of passes / 10", for example, "10/10" indicated that all 10 tests passed, while "5/10" indicated that 5 out of the 10 tests passed.

### 3. Sealing test

At an ambient temperature of 25°C ± 3°C, the battery was discharged at 0.2C to the lower limit voltage (3V) and allowed to stand for 10 min. The battery was then placed in a constant temperature box at 25°C and fully charged (100% SOC) at a constant current of 0.7C, with a cut-off current of 0.02C; after being fully charged, the cell was stored in an environment of 60°C & 95% RH (humidity). The thickness of the battery body was measured every 3 days. If the expansion rate exceeded 10%, it was considered as a fail, and if not 10%, it was considered as a pass, and the pass rate of the cells within 30 days was recorded. Each sample was tested ten times in total, and the results were expressed as "number of passes / 10", for example, "10/10" indicated that all 10 tests passed, while "5/10" indicated that 5 out of the 10 tests passed.

### 4. Opening test

At an ambient temperature of 25°C ± 3°C, the battery was discharged at 0.2C to a lower limit voltage of 3V and allowed to stand for 10 minutes. The battery was then placed in a constant temperature box at 25°C and fully charged (100% SOC) at a constant current of 0.7C, with a cut-off current of 0.02C. After being fully charged, the batteries were placed in environments of 120°C and 130°C respectively. It was observed whether the top of the battery was open or whether the electrolyte leaked within 2 minutes. If opening or electrolyte leakage occurred, it was considered as a pass, and if not, it was considered as a fail. Each sample was tested ten times in total, and the results were expressed as "number of passes / 10", for example, "10/10" indicated that all 10 tests passed, while "5/10" indicated that 5 out of the 10 tests passed.

The batteries obtained from the Example I group and Comparative Example I-1 were subjected to a sealing test, a complete device drop test and a hot box test at 135°C, respectively. The results obtained for Example I group and Comparative Example I-1 were reported in Table I-2.

**Table I-2**

| | Pass rate of sealing test | Pass rate of complete device drop test | Pass rate of hot box test at 135°C |
|---|---|---|---|
| Example I-1 | 8/10 | 5/10 | 8/10 |
| Example I-2a | 2/10 | 4/10 | 7/10 |
| Example I-2b | 7/10 | 6/10 | 6/10 |
| Example I-2d | 4/10 | 4/10 | 6/10 |
| Example I-3a | 10/10 | 10/10 | 9/10 |
| Example I-3b | 8/10 | 8/10 | 9/10 |
| Example I-3c | 3/10 | 6/10 | 6/10 |
| Example I-3d | 1/10 | 5/10 | 6/10 |
| Example I-3e | 3/10 | 5/10 | 7/10 |
| Comparative Example I-1 | 1/10 | 2/10 | 4/10 |

As can be seen from the Comparative Example and the Examples in Table I-2, the pass rate in the sealing test is improved, the pass rate in the complete device drop test is significantly improved, and the pass rate in the hot box test at 135°C is significantly improved for the batteries prepared from the insulating adhesives of the Examples. This indicates that the insulating adhesive of the present invention improves the bonding strength and high-temperature opening performance of the insulating adhesive are improved by defining the melting regions of the insulating adhesive, the melting peaks of these regions, and the temperature differences between the melting peaks.

Example II group was used to illustrate the insulating adhesive and packaging film of the present invention.

### Example II-1

This example was carried out with reference to Example I-1, except that the melting point of the first film layer in the packaging film was 140.8°C, specifically as shown in Table II-1.

### Example II-2

This example was carried out with reference to Example I-1, except that the melting point of the first film layer in the packaging film was 120.3°C, specifically as shown in Table II-1.

### Example II-3

This example was carried out with reference to Example I-1, except that the melting point of the first film layer in the packaging film was 165.6°C, specifically as shown in Table II-1.

The batteries obtained from the Example II group were subjected to a sealing test, a complete device drop test, a hot box test at 130°C and a hot box test at 140°C, respectively. The results obtained for Example II group were reported in Table II-1.

**Table II-1**

| | Melting point of first film layer/°C | Difference between melting points of first film layer and third adhesive layer/°C | Pass rate of sealing test | Pass rate of complete device drop test | Pass rate of hot box test at 130°C | Pass rate of hot box test at 140°C |
|---|---|---|---|---|---|---|
| Example II-1 | 140.8 | 20&35.4 | 10/10 | 10/10 | 10/10 | 9/10 |
| Example II-2 | 120.3 | -0.5&14.9 | 10/10 | 8/10 | 10/10 | 9/10 |
| Example II-3 | 165.6 | 44.8&60.2 | 10/10 | 8/10 | 8/10 | 7/10 |

As can be seen from the examples in Table II-1, the batteries prepared from the insulating adhesive and the packaging film of the examples exhibit a high pass rate in the sealing test and a high pass rate in the complete device drop test, indicating that the batteries have a good sealing effect, which can provide a sealed space for the batteries when thermal runaway has not occurred. The high pass rates in the hot box tests at 130°C and 140°C indicate that when thermal runaway occurs in the battery, the battery could open in time, providing a heat dissipation channel for the battery, and improving the safety performance of the battery.

The preferred embodiments of the present invention have been described in detail above; however, the present invention is not limited thereto. Within the technical concept of the present invention, various simple modifications can be made to the technical solution of the present invention, including the combination of various technical features in any other suitable way. These simple modifications and combinations should also be regarded as the content disclosed by the present invention and all fall within the scope of protection of the present invention.

## Claims

1. An insulating adhesive, **characterized in that** the insulating adhesive comprises at least three melting regions, wherein a first melting region has a melting peak a1 of 95°C-115°C, a second melting region has a melting peak a2 of 115°C-130°C, and a third melting region has a melting peak a3 of 140°C-165°C, and the temperature T3 of the melting peak a3 of the third melting region and the temperature T1 of the melting peak a1 of the first melting region satisfy the following relationship: b = T3-T1, where b is in°C, and b is 25°C-70°C.

2. The insulating adhesive according to claim 1, **characterized in that** b is 40°C-60°C; and/or
the insulating adhesive comprises at least a first adhesive layer and a second adhesive layer, wherein the second adhesive layer is located on the surface of one side of the first adhesive layer, the first adhesive layer has a melting point of 95°C-130°C, and the second adhesive layer has a melting point of 140°C-170°C.

3. The insulating adhesive according to claim 1 or 2, **characterized in that** the insulating adhesive comprises a third adhesive layer located on the surface of one side of the second adhesive layer away from the first adhesive layer, the insulating adhesive satisfying: the melting point of the second adhesive layer > the melting point of the third adhesive layer, and/or the melting point of the second adhesive layer > the melting point of the first adhesive layer.

4. The insulating adhesive according to claim 3, **characterized in that** the third adhesive layer has a melting point of 95°C-130°C; and/or
a temperature difference between the melting point of the third adhesive layer and the melting point of the first adhesive layer is -5°C to 25°C.

5. The insulating adhesive according to any one of claims 1-4, **characterized in that** the melting point of the first adhesive layer comprises the melting peak a1 of the first melting region and the melting peak a2 of the second melting region; and/or
the melting point of the second adhesive layer comprises the melting peak a3 of the third melting region.

6. The insulating adhesive according to any one of claims 3-5, **characterized in that** the melting point of the third adhesive layer comprises the melting peak a1 of the first melting region and the melting peak a2 of the second melting region.

7. The insulating adhesive according to any one of claims 1-6, **characterized in that** the first adhesive layer comprises a first modified resin comprising a first modified resin A1 and a first modified resin A2, wherein the first modified resin A1 has a melting point d1 of 95 ≤ d1 ≤ 115°C, and the first modified resin A2 has a melting point d2 of 115°C < d2 ≤ 130°C, a content by weight of the first modified resin A1 ≥ 50 wt%, and a content by weight of the first modified resin A2 ≤ 50 wt%, based on the total weight of the first adhesive layer.

8. The insulating adhesive according to any one of claims 3-7, **characterized in that** the third adhesive layer comprises a second modified resin, the third adhesive layer comprising a second modified resin C1 and a second modified resin C2, wherein the second modified resin C1 has a melting point f1 of 95 ≤ f1 ≤ 115°C, and the second modified resin C2 has a melting point f2 of 115°C < f2 ≤ 130°C, a content by weight of the second modified resin C1 ≥ 50 wt%, and a content by weight of the second modified resin C2 ≤ 50 wt%, based on the total weight of the third adhesive layer.

9. The insulating adhesive according to claim 7 or 8, **characterized in that** the first modified resin comprises one or more of maleic anhydride-modified polypropylene, acrylic-modified polypropylene, metallocene-modified polypropylene, a propylene-ethylene copolymer, and a butene-propylene copolymer; and/or
the second adhesive layer comprises one or more of polypropylene, block polypropylene, and copolypropylene; wherein the block polypropylene comprises alternating propylene-ethylene segments and/or alternating butylene-propylene segments; and the copolypropylene comprises an ethylene-propylene copolymer and/or a butylene-propylene copolymer.

10. The insulating adhesive according to claim 8 or 9, **characterized in that** the second modified resin comprises one or more of maleic anhydride-modified polypropylene, acrylic-modified polypropylene, metallocene-modified polypropylene, a propylene-ethylene copolymer, and a butene-propylene copolymer.

11. A battery, **characterized by** comprising the insulating adhesive according to any one of claims 1-10.

12. The battery according to claim 11, **characterized in that** the battery comprises an electrode plate assembly and a packaging film, wherein the electrode plate assembly comprises an electrode plate and an electrode plate conductive material, the electrode plate comprises a current collector and an active material layer located on the surface of one side or both sides of the current collector, the electrode plate conductive material is located at one end of the current collector, a first end of the conductive material is a welding end which is welded and connected to the current collector, a second end opposite to the first end is a protruding end, an adhesive coated region is formed between the welding end and the protruding end, an insulating adhesive is provided on the adhesive coated region and covers the surface of the conductive material, a surface of one side of the first adhesive layer in the insulating adhesive away from the second adhesive layer is adjacent to the conductive material, the packaging film and the insulating adhesive are connected together to form a sealed housing, the electrode plate assembly is located in a sealed space formed by the sealed housing, the packaging film comprises an inner film layer connected to the second adhesive layer or the third adhesive layer of the insulating adhesive, a metal layer located on the surface of the inner film layer, and an outer film layer located on the surface of the metal layer, the inner film layer comprises a first film layer directly connected to the second adhesive layer or the third adhesive layer of the insulating adhesive and a second film layer located between the first film layer and the metal layer, and the first film layer has a melting point of 120°C-165°C, preferably 130°C-145°C.

13. The battery according to claim 12, **characterized in that** a difference between the melting point of the first film layer and the melting point of the second adhesive layer or the third adhesive layer is -5°C to 40°C; and/or
the first film layer comprises modified polypropylene and/or a propylene-ethylene copolymer.

14. The battery according to claim 13, **characterized in that** the modified polypropylene comprises one or more of maleic anhydride-modified polypropylene, metallocene-modified polypropylene, an ethylene-propylene copolymer, and a silane coupling agent-modified polypropylene.

15. The battery according to any one of claims 12-14, **characterized in that** the heat-seal tensile force between the packaging film and the insulating adhesive is Y±0.5, in N/mm, and the temperature of the battery is T, in°C, and the battery satisfies the following relationship: Y = -0.04572 × T+5.779, where T is 20°C - 125°C.
